# EUROPEAN PATENT SPECIFICATION

(11) **EP 1 916 789 B1**
(45) Date of publication and mention of the grant of the patent: **11.02.2009**
(21) Application number: 06301076.3
(22) Date of filing: 23.10.2006
(51) Int. Cl.: H04J 3/06, H04L 7/04, H04B 7/26, H04L 12/28

(54) **Synchronization method and synchronization system**
Synchronisationsverfahren und Synchronisationssystem
Procédé et système pour la synchronisation

(43) Date of publication of application: 30.04.2008
(73) Proprietor: Alcatel Lucent, 75008 Paris (FR)
(72) Inventor: Bauer, Martin, 70191, Stuttgart (DE); Cesar, Bozo, 70439, Stuttgart (DE)
(74) Representative: Schneider, Sandra

(56) References cited:
- WO-A-98/02988
- US-A1- 5 675 591
- US-A1- 6 028 849
- US-A1- 2002 141 434
- US-A1- 2005 207 446

## Description

### BACKGROUND OF THE INVENTION

The present invention relates to a synchronization method and a synchronization system for data unit headers in a burst of digital data comprising multiple data units.

In cellular wireless access systems an uplink or downlink burst of digital data contains payload and optional stuffing data. The payload comprises one or several data units. A data unit is a sequence of digital data. Each data unit starts with a data unit header. In the burst the stuffing data is placed after the last data unit. In addition to the data unit header a data unit can comprise an optional data unit payload and an optional CRC (Cyclic Redundancy Check) field. Data units in a burst can have equal lengths or different lengths.

In cellular wireless access systems using an air interface according to e. g. WiMAX (Worldwide Interoperability for Microwave Access) IEEE 802.16-2004 and IEEE 802.1 6e-2005 standards, an uplink or downlink burst of digital data contains payload and optional stuffing data. The payload comprises one or several MAC PDU's (Media Access Control Packet Data Unit). In the burst the stuffing data is placed after the last MAC PDU. Each MAC PDU comprises a a Generic MAC header, optional MAC PDU payload and an optional CRC. MAC PDU's can have equal or different lengths. Althought the invention is explained referring to a WiMAX system, the invention is applicable to other communication standards with uplink or downlink busts containing multiple data units.

At the beginning of a burst, a data unit starts with its header. This means that the place of the first data unit header in the burst is known. It is at the begining of the burst. This is sometimes referred to as initial lock. The length of the data unit is indicated by the length field of the header. Using the length field, the start position of the next data unit and thus the next header containing the length field of the next data unit can be found. The headers can also contain a header checksum field. If the header checksum field is not correct, this means that the data unit header is not correct. If the data unit header is not correct, then the length field of the data unit header cannot be used to find the end of the data unit. Without a synchronization method or system, the following data units in the burst would be lost.

A synchronization method or system allows to resynchronize after one or several corrupted data unit headers so that the remaining data units in the burst will not be lost. Synchronization in this case means that the position of the data unit headers in the burst is known and that by reading the length field of the data unit headers, the following data unit in the burst can be found.

In US 2005/0207446 A1, a synchronization method is described which uses the header check sum mechanism to find the next header in the burst.

In US 5675591, a synchronization method for a frame containing several segments is described. The synchronization is achieved using a checksum of the frame and a length indicator field of the frame.

### OBJECT OF THE INVENTION

It is an object of the invention to provide a synchronization method and synchronization system to prevent the loss of the remaining data units in a burst after one or more data unit headers in a burst have been corrupted.

### SUMMARY OF THE INVENTION

These objects, and others that appear below, are achieved by a synchronization method according to claim 1 and a corresponding synchronization system according to claim 5.

According to one aspect of the invention, re-synchronization is done based on the length field contained in each data unit header, containing information about the length of the data unit to which the data unit header belongs. The synchronization method assumes a position in the data stream to be the length field in a data unit header and uses it to find the next data unit header containing the next length field and so on until the end of burst is reached.

If the last length field does not point exactly to the last byte of the burst payload, then the assumption was not correct and the next byte in the stream is assumed to be the start of a length field of a data unit header.

If the last length field points exactly to the last byte of the burst payload, then the assumption was correct and the synchronization method and system was successful. The position assumed to be a length field was correctly assumed to be a length field of a data unit header and the corresponding data unit header and all following data unit header including the corresponding data units have been found and are resynchronized.

The burst size is usually known from signalling information. In case of WiMAX, the burst size is known from MAC management messages. the down-link burst size is described in the DL-Map and the up-link burst size is described in the UL-Map.

In case there is no stuffing at the end of the burst, the end of the burst corresponds to the end of the payload of the burst. In this case the end of the payload can be known from the end of the burst information in signalling.

In case there is stuffing at the end of the burst, the end of payload can be searched according to the following embodiment of the invention.

According to another embodiment of the invention, the end of burst is searched in the received data stream. The search is done based on the stuffing area which may be present after the end of payload of a burst. To find the end of the payload of the burst, the stuffing area in the burst is seached. The bytes in a stuffing area usually have a predetermined value. The end of the payload can be found by byte-wise backwards searching the bytes in a burst.. If the bytes in the stuffing area e. g. have the hexadecimal value of 0xFF and if the last byte in the burst has the value 0xFF, then it is assumed that a stuffing area is present and it can be assumed that the last byte in the burst payload is the first byte not equal to 0xFF when searching from the end of the burst.

### BRIEF DESCRIPTION OF THE DRAWINGS

Other characteristics and advantages of the invention will be illustrated in the following description of a preferred embodiment and the accompanying drawings. The preferred embodiment and the accompanying drawings are given by way of non-limiting illustrations of the invention.
- Fig. 1: shows a schematic overview of a burst of digital data, comprising multiple data units,
- Fig. 2: shows a schematic overview of a burst with an illustration of the use of the length field of the data unit headers and
- Fig. 3: illustrates a method of finding the end of the payload of a burst.

### DETAILED DESCRIPTION OF THE INVENTION

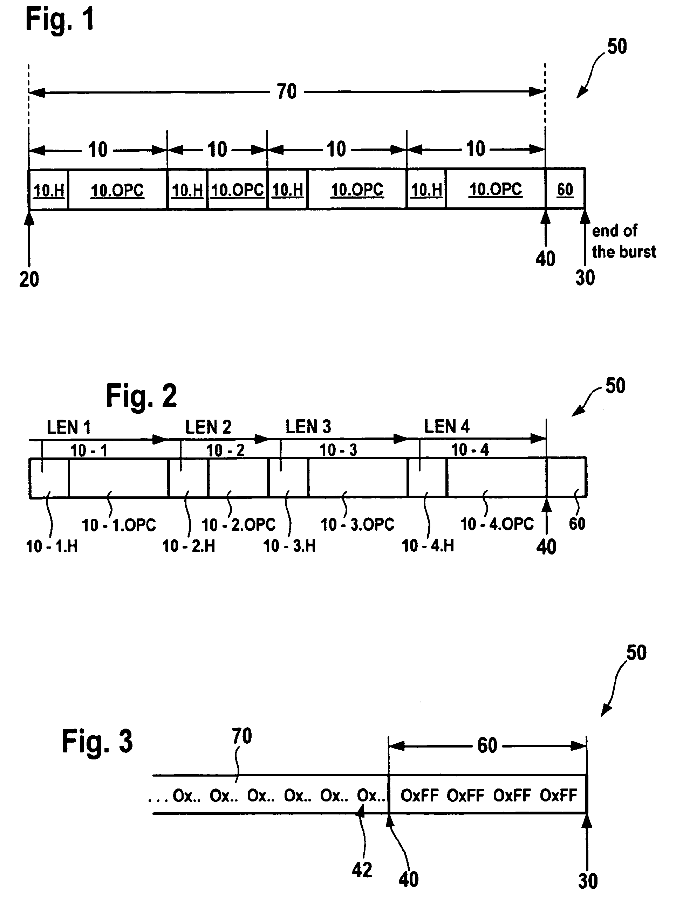

Fig.1 shows a schematic overview of an example of a burst 50 of digital data, comprising multiple data units 10, forming together the burst payload 70. The start of burst 20 ist also the start of the first data unit. The burst 50 optionally also comprises stuffing data 60. The endpoint 40 of the burst payload is at the same time the startpoint 40 of the stuffing data 60. The end 30 of the stuffing data 60 is also the end of the burst 50.The data units 10 in the burst 50 can have equal or different lengths. Each data unit 10 comprises a data unit header 10.H and an optional 10.OPC field. The 10.OPC field comprises the optional data unit payload and the optional CRC.

In a preferred embodiment of the invention, the invention is applied to WiMAX systems according to IEEE 802.16-2004 and IEEE 802.16e-2005 standards. An uplink or downlink burst 50 in a WiMAX system contains one or several data units 10, called MAC PDU's and optional stuffing data 60. The data unit header 10.H of a MAC PDU is called a generic MAC header.

Fig. 2 shows a schematic overview of a burst 50 with an illustration of the use of the length field LEN 1, LEN 2, LEN 3, LEN 4 of the respective data unit headers 10-1.H, 10-2.H, 10-3.H, 10-4.H. Each data unit 10-1, 10-2, 10-3, 10-4 may optionally also comprise a payload and CRC field 10-1.OPC, 10-2.OPC, 10-3.OPC, 10-4.OPC, respectively. The length of each data unit 10-1, 10-2, 10-3, 10-4 is indicated by respective length fields LEN 1, LEN 2, LEN 3, LEN 4 of the respective data units 10-1, 10-2, 10-3, 10-4. Using the length field LEN 1 of the data unit header 10-1.H of the data unit 10-1, the start position of the data unit 10-2 and thus the length field LEN 2 of the data unit header 10-2.H can be found. With the length field LEN 2, the start of the data unit 10-3 with the length field LEN 3 in the data unit header 10-3.H can be found, and so on.

If a header is corrupted this can be found out by additionally securing the data unit headers. In WiMAX this is done by using an additionaly header check sum mechanism, as will be explained in the following.

A MAC header contains a length field indicating the length in bytes of the MAC PDU including the MAC header and the optional CRC. The first five bytes of the generic MAC header are protected by the header check sum HCS which is the sixth byte in the MAC header.

At the beginning of the burst a MAC PDU starts with the generic MAC header. This is the so called initial lock. The length of the MAC PDU is indicated by the length field in the generic MAC header. Using the LEN field, the start position of the next MAC PDU and thus the next generic MAC header comprising the next length field can be found, as explained above. Each time a new generic MAC header is found, the header check sum is calculated and compared to the HCS field. If they are equal it can be assumed that the generic MAC header is correct and the LEN field can be used to find the end of the MAC PDU. If the header check sum does not correspond to HCS, the generic MAC header is not correct - it is corrupted. In this case the length field cannot be trusted to find the end of the MAC PDU and without a synchronization method or system all the following MAC PDU's in the burst would be lost.

Fig. 3 illustrates a method of finding the end 40 of the payload 70 of a burst 50, in case there is a stuffing area at the end of the burst. The end 40 of the payload 70 of a burst 50 is at the same time the start of the stuffing area 60 of that burst 50. If the last byte in the burst has the value 0xFF then it is assumed that a stuffing area is present and it can be assumed that the last byte of the burst payload is the first byte not equal to OxFF when searching from the end of the burst 30.

If the generic MAC header 10-k.H is not correct then the synchronization method assumes that the LEN k is correct, uses the LEN k field to find the next generic MAC header k+1 containing the length field LEN k+1 and so on. This is continued as long as the LEN field does point to a position before the end 40 of the burst payload 70.

If the last LEN field points exactly to the last byte 42 of the burst payload 70, then the assumption was correct and the synchronization method declares the position of the generic MAC header 10-k+ 1.H as "next valid MAC PDU".

If the last LEN field does not point exactly to the last byte 42 of the burst payload 70, but point to a position beyond the end 40 of the burst payload70, then the assumption taken above that LEN k was correct was not right. In this case the next assumption is taken: The next byte -the byte following the byte assumed to be start of LEN k above - is taken to be a length field of a MAC header. From this new length field, the following MAC PDU with following MAC header and following length field is searched as described above. If with this assumption the last LEN field does point exactly to the last byte 42 of the burst payload 70, then synchronization is achieved. The position of the MAC PDU to which the new length field points is declared the "next valid MAC PDU". If with this assumption the last LEN field does not point exactly to the last byte 42 of burst payload 70, the next assumption for the length field is taken and the method is continued as described above. This way the assumed LEN position is shifted until the last possible position at the end 40 of the burst payload 70. If no synchronization is found until the last possible position, the synchronization is not possible.

The synchronization system corresponding to the synchronization method comprises means for byte-wise reading the incoming burst 50 of digital data. It further comprises means for detecting the end 40 of burst payload 70 according to the method described above. The synchronization method further comprises controller means to perform the taking of assumptions on the length field as described above and of deciding if synchronization can be achieved using the information provided by the means for byte-wise reading the incoming data and the means for detecting the end 40 of burst payload 70.

## Claims

1. Synchronization method for data unit headers (10.H, 10-1.H, 10-2.H, 10-3.H, 10-4.H) contained in a burst (50) of multiple data units (10, 10-1, 10-2, 10-3, 10-4), said data unit headers (10.H, 10-1.H, 10-2.H, 10-3.H, 10-4.H) each comprising a length field (LEN 1, LEN 2, LEN 3, LEN 4) giving the length of the data unit (10, 10-1, 10-2, 10-3, 10-4) being headed by said data unit header (10.H, 10-1.H, 10-2.H, 10-3.H, 10-4.H), said synchronization method **characterised by** the steps of
- byte-wise reading digital data of said burst (50),
- detecting the end (40) of payload (70) of said burst (50) and
- deciding if synchronization can be achieved using said length fields (LEN 1, LEN 2, LEN 3, LEN 4) of said data unit headers (10.H, 10-1.H, 10-2.H, 10-3.H, 10-4.H) and information about the end (40) of the payload (70) of said burst (50).

2. Synchronization method according to claim 1, further comprising the steps of
a) reading a byte of said burst (50), setting it to be the currently-read-byte, assuming it to be the start of the length field (LEN 1, LEN 2, LEN 3, LEN 4) of a data unit header (10.H, 10-1.H, 10-2.H, 10-3.H, 10-4.H), assuming the length is correct and setting said length field (LEN 1, LEN 2, LEN 3, LEN 4) to be the current length field and the data unit (10, 10-1, 10-2, 10-3, 10-4) being headed by said current data unit header to be the current data unit;
b) reading the byte at the end of the current data unit, given by the read length, setting the byte at the end of the current data unit to be the end-of-current-data-unit-byte, and
c) comparing the position of the end-of-current-data-unit-byte to the position of the last byte (42) of the payload (70) of said burst (50) and deciding if synchronization can be achieved.

3. Synchronization method according to claim 2, the deciding step comprising the steps of, deciding
- if synchronization is achieved,
- if steps b) and c) have to be performed again with different assumptions for the current length field and the current data unit, or
- if synchronization cannot be achieved.

4. Synchronization method according to claim 2, said decision step comprising the following steps:
c1) if the end-of-current-data-unit-byte is the last byte (42) of the burst payload (70), then synchronization is achieved;
c2) if the end-of-current-data-unit-byte is before the last byte (42) of the burst payload (70): the byte following the current data unit is set to be the start of the next data unit header, setting the length field of said next data unit header to be the current length field and setting the data unit being headed by said next data unit header to be the current data unit; performing steps b) and c) for said new current length field and said new current data unit;
c3) if the end-of-current-data-unit-byte is beyond the end (40) of the burst payload (70), then
c31) if the byte following the currently-read-byte is still within the burst (50), the byte following the currently-read-byte is set to be the currently-read-byte and the start of the current length field of a data unit header and the data unit being headed by said data unit header is set to be the current data unit; performing steps b) and c) for said new current length field and said new current data unit;
c32) if the byte following the currently-read-byte is beyond the burst (50), synchronization cannot be achieved.

5. Synchronization system for data unit headers (10.H, 10-1.H, 10-2.H, 10-3.H, 10-4.H) contained in a burst (50) of digital data, said digital data comprising several data units (10, 10-1, 10-2, 10-3, 10-4), said data unit headers (10.H, 10-1.H, 10-2.H, 10-3.H, 10-4.H) each comprising a length field (LEN 1, LEN 2, LEN 3, LEN 4) giving the length of the data unit (10, 10-1, 10-2, 10-3, 10-4) being headed by said data unit header (10.H, 10-1.H, 10-2.H, 10-3.H, 10-4.H), **characterised by**
- said synchronization system comprising means for byte-wise reading digital data of said burst (50),
- means for detecting the end (40) of payload (70) of said burst (50) and
- controller means for deciding if synchronization can be achieved, said controller means using said length fields (LEN 1, LEN 2, LEN 3, LEN 4) of said data unit headers (10.H, 10-1.H, 10-2.H, 10-3.H, 10-4.H) and information about the end (40) of the payload (70) of said burst (50).

6. Synchronization system according to claim 5, further **characterized by** said controller means being adapted to detect said data unit headers (10.H, 10-1.H, 10-2.H, 10-3.H, 10-4.H) in the burst (50), in case synchronization can be achieved.

## Patentansprüche

1. Synchronisationsverfahren für Dateneinheits-Header (10.H, 10-1.H, 10-2.H, 10-3.H, 10-4.H), welche in einem Burst (50) von multiplen Dateneinheiten (10, 10-1, 10-2, 10-3, 10-4) mitgeführt werden, wobei die besagten Dateneinheits-Header (10.H, 10-1.H, 10-2.H, 10-3.H, 10-4.H) jeweils ein Längenfeld (LEN 1, LEN 2, LEN 3, LEN 4) enthalten, welches die Länge der mit dem besagten Dateneinheits-Header (10.H, 10-1.H, 10-2.H, 10-3.H, 10-4.H) versehenen Dateneinheit (10, 10-1, 10-2, 10-3, 10-4) angibt, wobei das besagte Synchronisationsverfahren durch folgende Schritte **gekennzeichnet** ist:
- Byteweises Lesen der Digitaldaten des besagten Bursts (50),
- Erkennen des Endes (40) der Nutzdaten (70) der besagten Bursts (50) und
- Entscheiden, ob die Synchronisation unter Benutzung der besagten Längenfelder (LEN 1, LEN 2, LEN 3, LEN 4) der besagten Dateneinheits-Header (10.H, 10-1.H, 10-2.H, 10-3.H, 10-4.H) durchgeführt werden kann, und Information über das Ende (40) der Nutzdaten (70) der besagten Bursts (50).

2. Synchronisationsverfahren nach Anspruch 1, weiterhin folgende Schritte umfassend:
a) Lesen eines Bytes des besagten Bursts (50), Bestimmen dieses Bytes als das aktuell gelesene Byte, Annehmen, dass dieses Bytes der Anfang des Längenfeldes (LEN 1, LEN 2, LEN 3, LEN 4) eines Dateneinheits-Headers (10.H, 10-1.H, 10-2.H, 10-3.H, 10-4.H) ist, Annehmen, dass die Länge korrekt ist, und Bestimmen des besagten Längenfelds (LEN 1, LEN 2, LEN 3, LEN 4) als das aktuelle Längenfeld, und Bestimmen der Dateneinheit (10, 10-1, 10-2, 10-3, 10-4), welche mit dem besagten aktuellen Dateneinheits-Header versehen ist, als die aktuelle Dateneinheit;
b) Lesen des Bytes am Ende der aktuellen Dateneinheit, welches von der gelesenen Länge angegeben wird, Bestimmen des Bytes Ende der aktuellen Dateneinheit als das Endbyte der aktuellen Dateneinheit, und
c) Vergleichen der Position des Endbytes der aktuellen Dateneinheit mit der Position des letzten Bytes (42) der Nutzdaten (70) des besagten Bursts (50), und Entscheiden, ob die Synchronisation durchgeführt werden kann.

3. Synchronisationsverfahren nach Anspruch 2, wobei der Entscheidungsschritt folgende Schritte umfasst:
- Entscheiden, ob die Synchronisation durchgeführt wird,
- Entscheiden, ob die Schritte b) und c) nochmals mit verschiedenen Annahmen für das aktuelle Längenfeld und die aktuelle Dateneinheit ausgeführt werden müssen, oder
- Entscheiden, ob die Synchronisation nicht ausgeführt werden kann.

4. Synchronisationsverfahren nach Anspruch 2, wobei der besagte Entscheidungsschritt die folgenden Schritte umfasst:
c1) Wenn das Endbyte der aktuellen Dateneinheit das letzte Byte (42) der Burst-Nutzdaten (70) ist:
c2) Wenn sich das Endbyte der aktuellen Dateneinheit vor dem letzten Byte (42) der Burst-Nutzdaten (70) befindet: das Byte, welches der aktuellen Dateneinheit folgt, wird als der Anfang des folgenden Dateneinheits-Headers angesehen, das Längenfeld des besagten folgenden Dateneinheits-Headers wird als das aktuelle Längenfeld angesehen, und die Dateneinheit, welche mit dem besagten folgenden Dateneinheits-Header versehen ist, wird als die aktuelle Dateneinheit angesehen; Ausführen der Schritte b) und c) für das besagte neue aktuelle Längenfeld und die besagte neue aktuelle Dateneinheit;
c3) Wenn sich das Endbyte der aktuellen Dateneinheit hinter dem Ende (40) der Burst-Nutzdaten (70) befindet,
c31) wenn sich das dem aktuell gelesenen Byte folgende Byte noch im Burst (50) befindet, wird das dem aktuell gelesenen Byte folgende Byte als das aktuell gelesene Byte angesehen, und der Anfang des aktuellen Längenfelds eines Dateneinheits-Headers und die Dateneinheit, welche mit dem besagten Dateneinheits-Header versehen ist, wird als die aktuelle Dateneinheit angesehen; Ausführen der Schritte b) und c) für das besagte neue aktuelle Längenfeld und die besagte neue aktuelle Dateneinheit;
c32) wenn sich das dem aktuell gelesenen Byte folgende Byte ausserhalb des Bursts (50) befindet, kann die Synchronisation nicht durchgeführt werden.

5. Synchronisationssystem für Dateneinheits-Header (10.H, 10-1.H, 10-2.H, 10-3.H, 10-4.H), welche In einem Burst (50) von digitalen Daten mitgeführt werden, wobei die digitalen Daten mehrere Dateneinheiten (10, 10-1, 10-2, 10-3, 10-4) umfassen, wobei die besagten Dateneinheits-Header (10.H, 10-1.H, 10-2.H, 10-3.H, 10-4.H) jeweils ein Längenfeld (LEN 1, LEN 2, LEN 3, LEN 4) umfassen, welches die Länge der mit dem besagten Dateneinheits-Header (10.H, 10-1.H, 10-2.H, 10-3.H, 10-4.H) versehenen Dateneinheit (10, 10-1, 10-2, 10-3, 10-4) angibt, **gekennzeichnet durch**:
- Das besagte Synchronisationssystem, welches Mittel für das Lesen der digitalen Daten des besagten Bursts (50) umfasst,
- Mittel zum Erkennen des Endes (40) der Nutzdaten (70) des besagten Bursts (50), und
- Kontrollmittel zum Entscheiden, ob die Synchronisation durchgeführt werden kann, wobei das besagte Kontrollmittel das besagte Längenfeld (LEN 1, LEN 2, LEN 3, LEN 4) der besagten Dateneinheits-Header (10.H, 10-1.H, 10-2.H, 10-3.H, 10-4.H) und Informationen über das Ende (40) der Nutzdaten (70) des besagten Bursts (50) benutzt.

6. Synchronisationssystem nach Anspruch 5, weiterhin **dadurch gekennzeichnet, dass** das besagte Kontrollmittel fähig ist, die besagten Dateneinheits-Header (10.H, 10-1.H, 10-2.H, 10-3.H, 10-4.H) in den Bursts (50) zu erkennen, wenn die Synchronisation durchgeführt werden kann.

## Revendications

1. Procédé de synchronisation pour des en-têtes d'unité de données (10.H, 10-1.H, 10-2.H, 10-3.H, 10-4.H) contenus dans une salve (50) de multiples unités de données (10, 10-1, 10-2, 10-3, 10-4), lesdits en-têtes d'unité de données (10.H, 10-1.H, 10-2.H, 10-3.H, 10-4.H) comprenant chacun un champ de longueur (LEN 1, LEN 2, LEN3, LEN4) donnant la longueur de l'unité de données (10, 10-1, 10-2, 10-3, 10-4) ayant pour tête ledit en-tête d'unité de données (10.H, 10-1.H, 10-2.H, 10-3.H, 10-4.H), ledit procédé de synchronisation étant **caractérisé par** les étapes suivantes :
- Lecture octet par octet des données numérique de ladite salve (50)
- Détection de la fin (40) de la charge utile (70) de ladite salve (50) et
- Décision de la possibilité d'obtenir la synchronisation en utilisant lesdits champs de longueur (LEN 1, LEN 2, LEN3, LEN4) desdits en-têtes d'unité de données (10.H, 10-1.H, 10-2.H, 10-3.H, 10-4.H) et l'information sur la fin (40) de la charge utile (70) de ladite salve (50).

2. Procédé de synchronisation selon la revendication 1, comprenant en plus les étapes suivantes :
a) Lecture d'un octet de ladite salve (50), déclaration de celui-ci octet en cours de lecture, supposition qu'il est le début du champ de longueur (LEN 1, LEN 2, LEN3, LEN4) d'un en-tête d'unité de données (10.H, 10-1.H, 10-2.H, 10-3.H, 10-4.H), supposition que la longueur est correcte et déclaration champ de longueur courant dudit champ de longueur (LEN 1, LEN 2, LEN3, LEN4) et unité de données courante de l'unité de données (10, 10-1, 10-2, 10-3, 10-4) ayant pour tête ledit en-tête d'unité de données ;
b) Lecture de l'octet à la fin de l'unité de données courante, définie par la longueur lue, déclaration octet de fin de l'unité de données courante de l'octet à la fin de l'unité de données courante et
c) Comparaison de la position de l'octet à la fin de l'unité de données courante avec la position du dernier octet (42) de la charge utile (70) de ladite salve (50) et décision de la possibilité d'obtenir la synchronisation.

3. Procédé de synchronisation selon la revendication 2, l'étape de décision comprenant les étapes de décision :
- de l'obtention de la synchronisation,
- de la nécessité d'exécuter une nouvelle fois les étapes b) et c) avec des suppositions différentes pour le champ de longueur actuel et l'unité de données actuelle, ou
- de l'impossibilité d'obtenir la synchronisation.

4. Procédé de synchronisation selon la revendication 2, ladite étape de décision comprenant les étapes suivantes :
c1) si l'octet de fin de l'unité de données courante est le dernier octet (42) de la charge utile (70) de la salve, la synchronisation est alors obtenue ; c2) si l'octet de fin de l'unité de données courante se situe avant le dernier octet (42) de la charge utile (70) de la rafale : l'octet qui suit l'unité de données courant est déclaré être le début de l'en-tête de l'unité de données suivante, ce qui déclare champ de longueur courant le champ de longueur de l'en-tête de ladite unité de données suivante et déclare unité de données courante l'unité de données ayant pour tête ledit en-tête de l'unité de données suivante ; exécution des étape b) et c) pour ledit nouveau champ de longueur courant et ladite nouvelle unité de données courante ; c3) si l'octet de fin de l'unité de données courante se situe après l'extrémité (40) de la charge utile (70) de la salve, alors
c31) si l'octet qui suit l'octet en cours de lecture se situe toujours à l'intérieur de la salve (50), l'octet qui suit l'octet en cours de lecture est déclaré être l'octet en cours de lecture courant et le début du champ de longueur actuel d'un en-tête d'unité de données et l'unité de données ayant pour tête ledit en-tête d'unité de données est déclarée être l'unité de données courante ; exécution des étape b) et c) pour ledit nouveau champ de longueur courant et ladite nouvelle unité de données courante ;
c32) si l'octet qui suit l'octet en cours de lecture se situe après la salve (50), la synchronisation ne peut pas être obtenue.

5. Système de synchronisation pour des en-têtes d'unité de données (10.H, 10-1.H, 10-2.H, 10-3.H, 10-4.H) contenus dans une salve (50) de données numériques, lesdites données numériques comprenant plusieurs unités de données (10, 10-1, 10-2, 10-3, 10-4), lesdits en-têtes d'unité de données (10.H, 10-1.H, 10-2.H, 10-3.H, 10-4.H) comprenant chacun un champ de longueur (LEN 1, LEN 2, LEN3, LEN4) donnant la longueur de l'unité de données (10, 10-1, 10-2, 10-3, 10-4) ayant pour tête ledit en-tête d'unité de données (10.H, 10-1.H, 10-2.H, 10-3.H, 10-4.H), **caractérisé en ce que:**
- ledit système de synchronisation comprend des moyens de lecture octet par octet des données numérique de ladite salve (50),
- des moyens pour détecter la fin (40) de la charge utile (70) de ladite salve (50) et
- des moyens contrôleurs pour décider de la possibilité d'obtenir la synchronisation, lesdits moyens contrôleurs utilisant lesdits champs de longueur (LEN 1, LEN 2, LEN3, LEN4) desdits en-têtes d'unité de données (10.H, 10-1.H, 10-2.H, 10-3.H, 10-4.H) et l'information sur la fin (40) de la charge utile (70) de ladite salve (50).

6. Système de synchronisation selon la revendication 5, **caractérisé en** plus en ce que lesdits moyens contrôleurs sont conçus pour détecter lesdits en-têtes d'unité de données (10.H, 10-1.H, 10-2.H, 10-3.H, 10-4.H) dans la salve (50) dans le cas où la synchronisation peut être obtenue.
